(19) **Europäisches Patentamt**

**European Patent Office**

**Office européen des brevets**

(11) Veröffentlichungsnummer: **0 276 388 B1**

(12) **EUROPÄISCHE PATENTSCHRIFT**

(45) Veröffentlichungstag der Patentschrift: **02.01.92**

(51) Int. Cl.⁵: **B60R 13/06**

(21) Anmeldenummer: **87116698.9**

(22) Anmeldetag: **12.11.87**

(54) **Dichtung für ein Cabriolet-Verdeck.**

(30) Priorität: **23.12.86 DE 3644283**

(43) Veröffentlichungstag der Anmeldung:
**03.08.88 Patentblatt 88/31**

(45) Bekanntmachung des Hinweises auf die
Patenterteilung:
**02.01.92 Patentblatt 92/01**

(84) Benannte Vertragsstaaten:
**DE ES FR GB IT**

(56) Entgegenhaltungen:
**EP-A- 0 220 823**
**GB-A- 993 025**
**US-A- 2 759 760**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Leistner, Rolf**
**Rambertweg 13**
**W-8000 München 50(DE)**
Erfinder: **Nebel, Hans**
**Johanneskirchenerstrasse 151 a**
**W-8000 München 81(DE)**
Erfinder: **Possenriede, Herbert**
**Raffoltstrasse 17**
**W-8069 Schweitenkirchen(DE)**

(74) Vertreter: **Dexheimer, Rolf**
**Bayerische Motoren Werke Aktiengesellschaft Postfach 40 02 40 Petuelring 130 - AJ-31**
**W-8000 München 40(DE)**

## Beschreibung

Die Erfindung bezieht sich auf eine Dichtung der im Oberbegriff des Patentanspruchs 1 genannten Art, welche aus der US-A-2 759 760 hervorgeht.

Das in dieser Druckschrift offenbarte Cabriolet-Verdeck hat an seinen beiden gegenüberliegenden Längsrändern jeweils zwei Halteschienenabschnitte, in deren Längsausnehmungen jeweils über ein rohrförmiges, eine Umfangslücke aufweisendes Aufnahmeteil ein Dichtungsabschnitt angeordnet ist. Dabei ist im Halteschienenabschnitt ein aus einem Arretierstift oder einer Kugel bestehendes Fixierelement angeordnet, das in eine Ausnehmung des Aufnahmeteils eingreift. Ferner sind die Halteschienenabschnitte über einen in Fahrzeugquerrichtung verlaufenden Schwenkbolzen scharnierartig aneinander angelenkt, wobei die einander zugewandten Stirnseiten der Halteschienenabschnitte mit Aufnahmeteilen und Dichtungsabschnitte unter jeweils V-förmiger Gestaltung (V-förmiger Endbereich und V-förmige Ausnehmung) ineinander eingreifen. Die V-förmige Ausbildung der Stirnseiten ist jedoch nicht nur sehr arbeitsaufwendig und damit teuer herzustellen, sondern V-förmig gestaltete Stirnseiten an Dichtungsabschnitten können vor allem nicht bei einem räumlich gekrümmten Verlauf der Seitenränder des Cabriolet-Verdecks vorgesehen werden, da sich hierbei an den V-förmigen Stirnseiten der Dichtungsabschnitte Luftspalte bilden, über die Wasser in den Fahrzeuginnenraum gelangen kann und auch dessen Schalldichtheit vermindert wird. Diese Nachteile entstehen ferner auch durch einen etwas zu lang bemessenen Dichtungsabschnitt, da hierbei dessen V-förmiger Endbereich mit zu hoher Vorspannung gegen die Wandung der V-förmigen Ausnehmung des angrenzenden Dichtungsabschnitts gepreßt wird, wodurch Verformungen an den Stirnseiten der Dichtungsabschnitte entstehen.

Ferner geht aus der GB-A-993 025 eine Fahrzeugtür hervor, an deren Rahmen ein mit dem Türausschnitt der Karosserie zusammenwirkendes Dichtungselement befestigt ist. Dabei sind an einem Randflansch der Fahrzeugtür eine Anzahl von im Abstand nebeneinander liegende Haltebolzen angebracht, die in eine Ausnehmung des Dichtungselements eingreifen, so daß dieses an der Fahrzeugtür verschiebesicher festgelegt ist.

Aufgabe der Erfindung ist es daher, eine Dichtung der im Oberbegriff des Patentanspruchs 1 genannten Art derart auszubilden, daß sich ihre Dichtungsabschnitte in unterschiedlichen Winkellagen an den gekrümmten Verlauf der Längsränder des Cabriolet-Verdecks in einfacher Weise anpassen können.

Zur Lösung der Aufgabe sind die im kennzeichnenden Teil des Patentanspruchs 1 dargelegten Merkmale vorgesehen.

Durch die erfindungsgemäße Anordnung einer Kugelpfanne und eines kugelkalottenförmigen Endstücks an den Stirnseiten der Dichtungsabschnitte können sich diese vorteilhafterweise sehr einfach in unterschiedlichen Winkellagen an den gekrümmten Verlauf der Längsränder des Cabriolet-Verdecks anpassen. Dabei gewährleistet die Kugelpfanne und das mit diesem gelenkig zusammenwirkende kugelkalottenförmige Endstück nicht nur eine sehr hohe Wasser- und Schalldichtheit, sondern durch diese Ausbildung wird auch der optische Eindruck der Stoßstelle, da an dieser kein Luftspalt sichtbar ist, erheblich verbessert.

Da die Kugelpfanne und das Endstück aus sehr weichem Moosgummi bestehen, sind sie wesentlich druckelastischer als der Gummi der Dichtungsabschnitte ausgebildet, so daß die Seitenscheiben in ihrer Schließstellung ohne verminderte Dichtwirkung in die Dichtungsabschnitte eintauchen können (Merkmal des Patentanspruchs 2).

Die Kugelpfanne und das Endstück kann in den Hohlraum des ersten und zweiten Dichtungsabschnitts eingesetzt oder an diesen durch Kleben oder Vulkanisieren befestigt sein (Merkmale der Patentansprüche 3 und 4).

Eine absolut lagegenaue Festlegung der Dichtungsabschnitte an den Halteschienenabschnitten besteht darin, an ihren Endbereichen jeweils ein Fixierelement vorzusehen, das in eine zugeordnete Ausnehmung paßgenau eingreift (Merkmal des Patentanspruchs 5).

Zweckmäßigerweise ist als Fixierelement ein Haltestift vorgesehen, der für ein kostengünstiges Einsetzen in einen Halteschienenabschnitt aus gehärtetem Stahl besteht und dabei in den Grund des Halteschienenabschnitts unter Verzicht auf eine in diesem angeordnete Bohrung eingepreßt wird (Merkmale der Patentansprüche 6 und 7).

Ein Ausführungsbeispiel der Erfindung ist in der Zeichnung dargestellt und wird im folgenden erläutert. Es zeigt:

Fig. 1    Die Endbereiche zweier aneinanderstoßenden Halteschienen- und Dichtungsabschnitte eines Cabriolet-Verdecks,

Fig. 2    einen Schnitt längs der Linie II-II in Fig. 1,

Fig. 3    einen Schnitt längs der Linie III-III in Fig. 1.

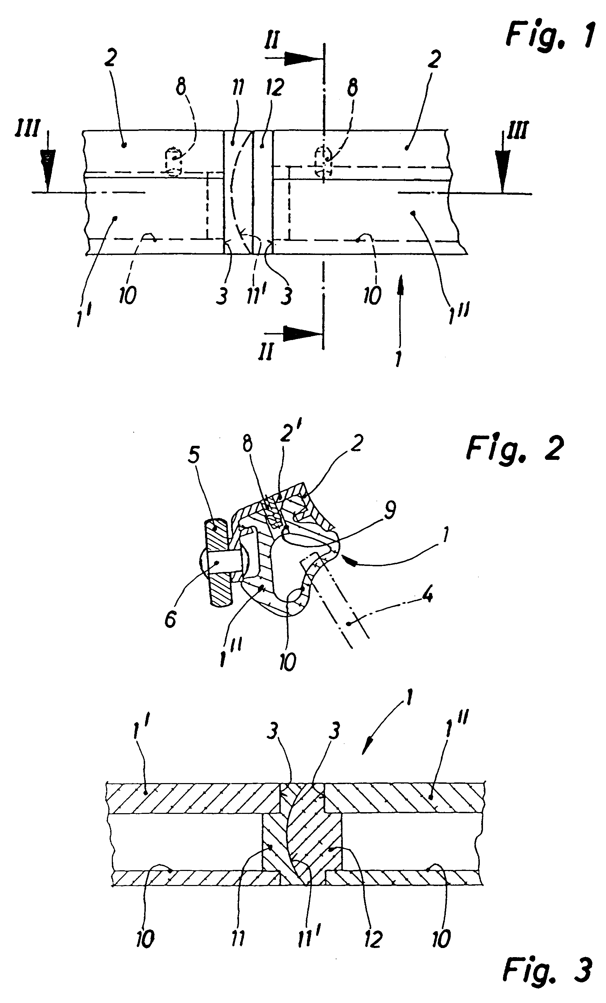

Eine längs den beiden gegenüberliegenden Längsrändern eines Cabriolet-Verdecks verlaufende Dichtung 1 aus gummielastischem Material besteht ebenso wie die sie tragende Halteschiene 2 im vorliegenden Ausführungsbeispiel aus drei Längsabschnitten, von denen in den Fig. 1 und 3 ein erster Dichtungsabschnitt 1′ und ein zweiter

Dichtungsabschnitt 1″ dargestellt sind. Deren Stirnseiten 3 sind dabei einander zugewandt und liegen mit den Stirnseiten der Halteschienenabschnitte 2 jeweils in einer gemeinsamen Trennebene; zwischen den einander zugewandten Stirnseiten der Halteschienenabschnitte 2 kann dabei jeweils eine Lücke vorgesehen sein. Die Halteschienenabschnitte 2 sind jeweils an ihrer Rückseite - welche einer Seitenscheibe 4 der Personenkraftwagens gegenüberliegt - an einem Gelenkteil 5 des Cabriolet-Verdecks über wenigstens zwei im Abstand voneinanderliegenden Nieten 6 o.dgl. Befestigungsmittel befestigt.

Wie in den Fig. 1 und 2 ersichtlich, steht vom Grund 2′ der beiden Halteschienenabschnitte 2 an deren einander zugewandten Endbereichen jeweils ein Haltestift 8 ab, der in eine im Fuß der Dichtungsabschnitte 1′ und 1″ an ihren einander zugewandten Endbereichen angeordnete Ausnehmung 9 eingreift. Hierdurch sind die Dichtungsabschnitte 1′ und 1″ nach Anordnung an einem Halteschienenabschnitt 2 jeweils verschiebesicher und wiederholgenau festgelegt. Der aus gehärtetem Stahl bestehende Haltestift 8 ist dabei in den Grund 2′ des aus Leichtmetall bestehenden Halteschienenabschnitts 2 unter Verzicht auf eine Bohrung, also in rationeller Weise, eingepreßt und steht dabei vom Grund 2′ um eine etwa seinem doppelten Durchmesser entsprechende Längserstreckung ab; die Ausnehmungen 9 können dabei mit einer Aussenkung versehen sein.

Wie in Fig. 3 ersichtlich, ist an der Stirnseite 3 des ersten Dichtungsabschnitts 1′ eine in dessen Hohlraum 10 eingesetzte Kugelpfanne 11 angebracht, mit deren sphärischer Ausnehmung 11′ ein kugelkalottenförmiges Endstück 12 gelenkig zusammenwirkt, das seinerseits an der Stirnseite 3 des zweiten Dichtungsabschnitts 1″ angebracht ist und dabei in dessen Hohlraum 10 eingreift. Die Kugelpfanne 11 und das Endstück 12 können auch an den Stirnseiten 3 der Dichtungsabschnitte 1′ und 1″ durch Kleben, Vulkanisieren o.dgl. befestigt werden. Ferner besteht die Kugelpfanne 11 und das Endstück 12 aus sehr weichem Moosgummi und sind daher druckelastischer als der Gummi der Dichtungsabschnitte 1′ und 1″ ausgebildet, so daß die Seitenscheiben 4 in ihrer Schließstellung in diese behinderungsfrei, also mit nicht verminderter Dichtwirkung, eintauchen können; hierfür können auch an der Kugelpfanne 11 und am Endstück 12 Längsnuten vorgesehen werden. Nachdem schließlich die Kugelpfanne 11 und das Endstück 12 über ihre sphärischen Oberflächen gelenkig zusammenwirken, kann sich die Dichtung 1 im Bereich ihrer einzelnen Dichtungsabschnitte - von denen die beiden Dichtungsabschnitte 1′ und 1″ dargestellt sind -exakt in unterschiedlichen Winkellagen an den gekrümmten Verlauf der Längsränder des Cabriolet-Verdecks anpassen, wobei die einander zugewandten sphärischen Oberflächen von Kugelpfanne 11 und Endstück 12 abdichtend, nämlich wasser- und schalldicht, durch die paßgenaue Anordnung der Dichtungsabschnitte 1′ und 1″ über die Haltestifte 8 an den Halteschienenabschnitten 2 aneinanderliegen. Da die Kugelpfanne 11 und das Endstück 12 über ihre sphärischen Oberflächen ineinandergreifen, kann schließlich auch zwischen den Dichtungsabschnitten 1′ und 1″ kein von außen sichtbarer Luftspalt entstehen.

## Patentansprüche

1. Dichtung (1) für ein Cabriolet-Verdeck, die von einer längs dessen gegenüberliegenden Rändern verlaufenden Halteschiene (2) gehalten ist und ebenso wie diese aus mehreren Abschnitten besteht, wobei an jeweils einem Abschnitt der Halteschiene (2) wenigstens ein Fixierelement (Haltestift 8) vorgesehen ist, das zum Festlegen jeweils eines Dichtungsabschnitts (1', 1") dient, dadurch gekennzeichnet, daß an der Stirnseite (3) eines ersten Dichtungsabschnitts (1') eine Kugelpfanne (11) angebracht ist, mit der ein kugelkalottenförmiges, seinerseits an der Stirnseite (3) eines angrenzenden, zweiten Dichtungsabschnitts (1") angebrachtes Endstück (12) gelenkig zusammenwirkt.

2. Dichtung nach Anspruch 1, dadurch gekennzeichnet, daß die Kugelpfanne (11) und das Endstück (12) aus druckelastischem Moosgummi bestehen.

3. Dichtung nach Anspruch 2, dadurch gekennzeichnet, daß die Kugelpfanne (11) und das Endstück (12) jeweils in den Hohlraum (10) des ersten und zweiten Dichtungsabschnitts (1', 1") eingesetzt sind.

4. Dichtung nach Anspruch 2, dadurch gekennzeichnet, daß die Kugelpfanne (11) und das Endstück (12) jeweils durch Kleben oder Vulkanisieren am ersten und zweiten Dichtungsabschnitt (1', 1") befestigt sind.

5. Dichtung nach Anspruch 1, dadurch gekennzeichnet, daß an den beiden Endbereichen von Dichtungsabschnitt (1', 1") und Halteschienenabschnitt (2) jeweils mindestens ein Fixierelement (Haltestift 8) und eine dieses verschiebesicher aufnehmende Ausnehmung (9) vorgesehen ist.

6. Dichtung nach Anspruch 1 oder 5, dadurch gekennzeichnet, daß das Fixierelement als ein in den Dichtungsabschnitt (1', 1") oder den

Halteschienenabschnitt (2) eingesetzter Haltestift (8) ausgebildet ist.

7. Dichtung nach Anspruch 6, dadurch gekennzeichnet, daß der aus gehärtetem Stahl bestehende Haltestift (8) in den Grund (2') des Halteschienenabschnitts (2) eingepreßt ist.

## Claims

1. A seal (1) for a cabriolet hood, which is held by a retaining rail (2) extending along its opposite edges and, like this rail, comprises a plurality of sections, where at least one fixing element (retaining pin 8) is provided on one section in each case of the retaining rail (2), which element serves for making fast one seal section (1', 1") in each case, characterised in that, on the end face (3) of a first seal section (1'), there is provided a ball socket (11) to which is articulated an end piece (12) of part-spherical form, for its part fitted on the end face of an adjoining second seal section (1").

2. A seal according to Claim 1, characterised in that the ball socket (11) and the end piece (12) comprise compressionally-elastic sponge rubber.

3. A seal according to Claim 2, characterised in that the ball socket (11) and the end piece (12) are each inserted into the cavity (10) of the first and second sealing section (1', 1").

4. A seal according to Claim 2, characterised in that each of the ball socket (11) and the end piece (12) are secured by sticking or vulcanisation to the first and second sealing sections (1', 1").

5. A seal according to Claim 1, characterised in that, at each of the two end regions of sealing section (1', 1") and retaining rail section (2), at least one fixing element (retaining pin 8) and an aperture (9) receiving this element non-displaceably are provided.

6. A seal according to Claim 1 or 5. characterised in that the fixing element is formed as a retaining pin (8) inserted into the sealing section (1', 1") or the retaining rail section (2).

7. A seal according to Claim 6, characterised in that the retaining pin (8), consisting of hardened steel, is pressed into the bottom (2') of the retaining rail section (2).

## Revendications

1. Joint d'étanchéité (1) pour capote de cabriolet, qui est maintenu par une barre de maintien (2) s'étendant le long de ses bordures se faisant vis-à-vis et qui est également formé comme celle-ci de plusieurs sections, dans lequel est prévu au moins un élément de fixation (tenon d'arrêt 8) sur chacune des sections de barres de maintien (2), élément qui sert à la fixation à chaque fois d'une section d'étanchéité (1',1"), joint d'étanchéité, caractérisé en ce que sur le côté frontal (3) d'une première section d'étanchéité (1') est disposée une cuvette (11) avec laquelle coopère de façon articulée une pièce terminale (12) en forme de calotte sphérique disposée de son côté sur le côté frontal (3) d'une deuxième section d'étanchéité (1") adjacente.

2. Joint d'étanchéité selon la revendication 1, caractérisé en ce que la cuvette (11) et la pièce terminale (12) sont réalisées en caoutchouc mousse élastique.

3. Joint d'étanchéité selon la revendication 2, caractérisé en ce que la cuvette (11) et la pièces terminale (12) sont à chaque fois insérées dans l'espace creux (10) de la première et de la deuxième section d'étanchéité (1',1").

4. Joint d'étanchéité selon la revendication 2, caractérisé en ce que la cuvette (11) et la pièce terminale (12) peuvent être fixées par collage ou par vulcanisation sur la première et sur la deuxième section de joint d'étanchéité (1',1").

5. Joint d'étanchéité selon la revendication 1, caractérisé en ce que aux deux zones terminales de sections de joint d'étanchéité (1',1") et de section de barres de maintien (2) il est prévu au moins un élément de fixation (tenon d'arrêt 8) et un évidement (9) recevant cet élément sans qu'il puisse se déplacer.

6. Joint d'étanchéité selon la revendication 1 ou 5, caractérisé en ce que l'élément de fixation est constitué comme un tenon d'arrêt (8) inséré dans la section de joint d'étanchéité (1',1") ou la section de barres de maintien (2).

7. Joint d'étanchéité selon la revendication 6, caractérisé en ce que le tenon d'arrêt (8) réalisé en acier durci est enfoncé par pressage dans le fond (2') de la section de barres de maintien (2).

Fig. 1

Fig. 2

Fig. 3